Europäisches Patentamt

European Patent Office

Office européen des brevets

(19)

(11) Publication number: **0 091 571**
**B1**

## EUROPEAN PATENT SPECIFICATION

(12)

(45) Date of publication of patent specification: **13.07.88**

(51) Int. Cl.⁴: **B 01 D 13/00, A 61 M 1/16**

(21) Application number: **83102690.1**

(22) Date of filing: **30.01.81**

(80) Publication number of the earlier application in accordance with Art. 76 EPC: **0 036 927**

(54) A device for the diffusion of substances between two fluids via semipermeable membranes.

(30) Priority: **19.03.80 PCt/se80/00083**

(43) Date of publication of application:
**19.10.83 Bulletin 83/42**

(45) Publication of the grant of the patent:
**13.07.88 Bulletin 88/28**

(84) Designated Contracting States:
**AT BE CH DE FR GB IT LI LU NL SE**

(56) References cited:
**FR-A-2 026 998**
**GB-A-2 017 531**
**US-A-3 459 310**
**US-A-3 540 595**
**US-A-3 734 298**
**US-A-3 837 496**
**US-A-4 113 625**

(73) Proprietor: **Gambro Lundia AB**
**Box 10101**
**S-220 10 Lund (SE)**
(84) **SE**

(73) Proprietor: **Gambro AG**
**c/o Camillo Andina Himmelrich 11**
**CH-6340 Baar (CH)**
(84) **BE CH DE FR GB IT LI LU NL AT**

(72) Inventor: **Riede, Gerhard**
**Möllevangsgatan 7**
**S-235 00 Vellinge (SE)**
Inventor: **Nilsson, Nils-Joel Eddie**
**Trastvägen 6**
**S-280 10 Sösdala (SE)**

(74) Representative: **Boberg, Nils Gunnar Erik**
**Gambro AB Patent Department Box 10101**
**S-220 10 Lund (SE)**

Courier Press, Leamington Spa, England.

## Description

The present invention relates to a device for the diffusion of substances between two fluids comprising semipermeable membranes which are arranged in a stack separated by spacer plates which comprise throughholes connected to inlets and outlets for the respective fluids, a first fluid of which is arranged so as to be conducted on one side of the membranes and a second fluid on the opposite side of the same membranes, where the stack of spacer plates and membranes is arranged between a top plate and a bottom plate, the inlet and/or outlet for at least one of the said fluids communicating by means of an enclosed duct with a duct intersecting the stack and formed by the said through-holes, the stack of spacer plates and intermediate membranes having an elongated shape with tapering ends.

The device in accordance with the invention is intended foremost to be used for the purification of blood, that is to say as a so-called artificial kidney. However, it will be clear to those skilled in the art that the apparatus in accordance with the invention can also be used for many other purposes. It may be used for example for the oxygenation of blood. The first of the above-mentioned fluids will then consist of blood, whilst the other will consist of oxygen or an oxygen mixture. Alternatively the device, in accordance with the invention, may be used for the transfer of substances from one gas to another. The term fluid, as used in the following description, means therefore gas as well as liquid.

Background art

Apparatuses of the above-mentioned type are known and are described for example in Swedish patents 218 441, 301 209, 325 370, 314 167, 342 144, 355 293, 365 119, 393 534 and 407 900, which all show apparatuses comprising a stack of spacer plates with membranes, preferably arranged in pairs between them.

The above-mentioned Swedish patents describe a development leading to a construction of the above defined kind. The last mentioned Swedish patent 407 900 corresponds to the cited US patent 4 113 625. Such a construction differs from the one according to the present invention in that it was not provided with any inlets and outlets connected from the side to a duct intersecting the stack and formed by said through-holes by means for in the top and bottom plates enclosed angular ducts. Such angular ducts may, are however, known per se by for instance the cited US patents 3 459 310 and 3 540 595.

Disclosure of invention

The device according to the invention is characterized in that the inlet and/or outlet communicates with the duct intersecting the stack via said enclosed duct and via a nipple which is wholly within the area defined by the longitudinal and transverse prolongations of a front wall and adjacent side wall, respectively, and in that each enclosed duct is an angular duct.

Thanks to this arrangement of the nipples and the combination with the above-mentioned angular ducts the top and bottom plates may be made much thinner for a construction according to the present invention compared with constructions according to the prior art. The thickness of the said top and bottom plates is now only dependent on the clamping forces in connection with the mounting of the dialyser, i.e. it is not dependent on the kind of nipple used.

This arrangement provided also substantial other advantages which will be evident from the following description. It is for instance an appreciable advantage that the stack in its entirety including clamping elements for the same can be made lower than in conventional designs. The nipples are furthermore well protected by the rest of the construction.

The membranes are preferably arranged in pairs between the spacer plates. This makes it possible to conduct the blood without contact with the plates between the membranes in the individual pairs. It is also possible, however, to conceive designs with single membranes arranged between adjoining spacer plates.

In a preferred embodiment of the subject of the invention, an intermediate plate is arranged between the said top plate and the nearest spacer plate. This intermediate plate may be provided with an angled nipple which contains the above-mentioned angular duct, one end of which is connected to an inlet or an outlet and the other end is connected to the duct intersecting the stack and formed by the said through-holes. In this manner an apparatus with a small number of seals is achieved.

Simple sealing conditions are achieved if the said angular nipple is provided with a lateral duct which connects the same directly to the inner side of the intermediate plate.

The stack of spacer plates and membranes between them is preferably gripped between the top plate and the bottom plate with the help of clamping rails arranged between grooves in the top and bottom plates. At least one of these clamping rails is provided appropriately with holes for connecting nipples to provide connection to the duct formed by the said through-holes. These connecting nipples are appropriately arranged so that they are fixed to the top and bottom plates and/or clamping rails, whilst they are liquid-tight against the spacer plates to provide connection to the duct formed in these by the said through-holes.

When two clamping rails arranged on opposite sides of a longitudinal apparatus are used, one of these clamping rails is provided appropriately with two connection nipples, whilst the other one is not provided with any. As a result the connections will be oriented substantially in the same direction, which constitutes an advantage in practical use.

Brief description of drawings

In the following the invention will be described in greater detail with reference to the enclosed drawing, which show by way of example a preferred embodiment of the same.

Figure 1 shows a device in accordance with the invention seen from above.

Figure 2 shows the same device seen from the side.

Figure 3 shows a section along line III—III in figure 1.

Figure 4 shows a section along line IV—IV in figure 1.

Figure 5 shows an intermediate plate included in the device in accordance with the invention seen from underneath.

Figure 6 shows the same intermediate seen from above.

Figure 7 shows a section along line VII—VII in figure 5.

Figure 8 shows a section along line VIII—VIII in figure 5.

Figure 9 shows a section along line IX—IX in figure 5.

Figure 10 shows a section along line X—X in figure 5.

Figure 11 finally shows the circular area XI from figure 6 detached and on a larger scale.

Best mode of carrying out the invention

The preferred embodiment shown as an example is intended first and foremost to be used as a so-called artificial kidney, that is to say for dialysis. It is described therefore in the following with reference to such a treatment.

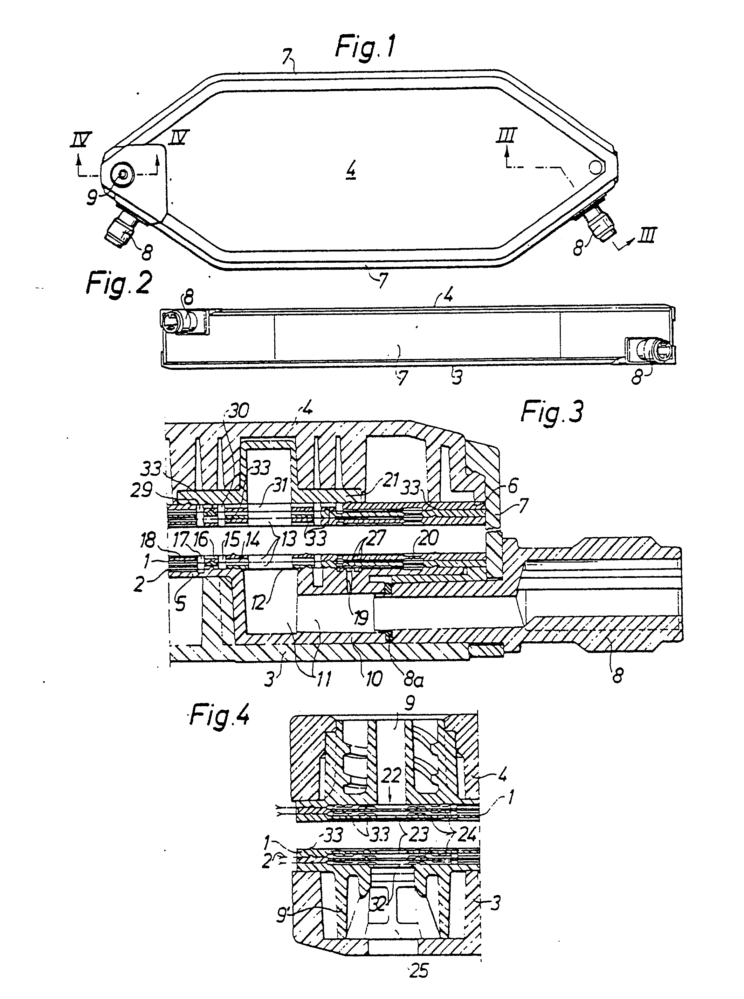

As is evident most clearly from figures 3 and 4, the device shown comprises a stack of spacer plates 1 with membranes 2 arranged in pairs between them. This stack is arranged between a bottom plate 3 and a top plate 4. Inside the last-named are situated a lower intermediate plate 5 and an upper intermediate plate 6.

The bottom plate 3 and the top plate 4 are held firmly clamped against the stack located between them with the help of clamping rails 7. The dialysis liquid is supplied and withdrawn via identical connecting nipples 8 fixed into holes in one of the clamping rails 7. Inlets and outlets 9 for the blood are provided in the top and bottom plates. If the connection 9 shown in fig. 1 constitutes the inlet for the blood, a corresponding outlet (not shown) will thus be found on the opposite end of the bottom plate 3.

The apparatus as a whole has an elongated shape with tapering ends. The advantages of such a realization are demonstrated in greater detail in Swedish patents 393 534 and 407 900. Details from the apparatuses in accordance with the said patents may also be used in connection with the present apparatus.

The connection nipple 8 for dialysis liquid is shown on a larger scale in figure 3 connected to an angle nipple 10 on the lower intermediate plate 5. This angle nipple contains an angular duct 11 which is connected with one end to a duct 12 formed by holes 13 in the spacer plates 1 and which runs transversely through the stack of spacer plates 1 and membranes 2. From the holes 13 the dialysis liquid flows through ducts 14 on the one side of the spacer plates, through through-holes 15 in the spacer plates and through ducts 16 on the opposite side of the spacer plates. Thanks to through-holes 17, the dialysis liquid is finally distributed to ducts 18 on the working surface proper of the spacer plates.

Numeral 8a designates a seal between the angle nipple 10 and the connecting nipple 8 which otherwise is fixed mechanically in the bottom plate 3.

In the example shown, the upper side of the lower intermediate plate 5 and the lower side of the upper intermediate plate 6 have been provided with a pattern substantially corresponding to that on the spacer plates. For conducting the dialysis liquid to the upper or inner side of the lower intermediate plate 5, a special lateral duct 19 exists which directly connects the angle duct 11 to the ducts 27 on the inside of the intermediate plate 5.

The duct 12 penetrating through the stack is shut off at the end opposite the angle nipple 10 by a closing plug 21.

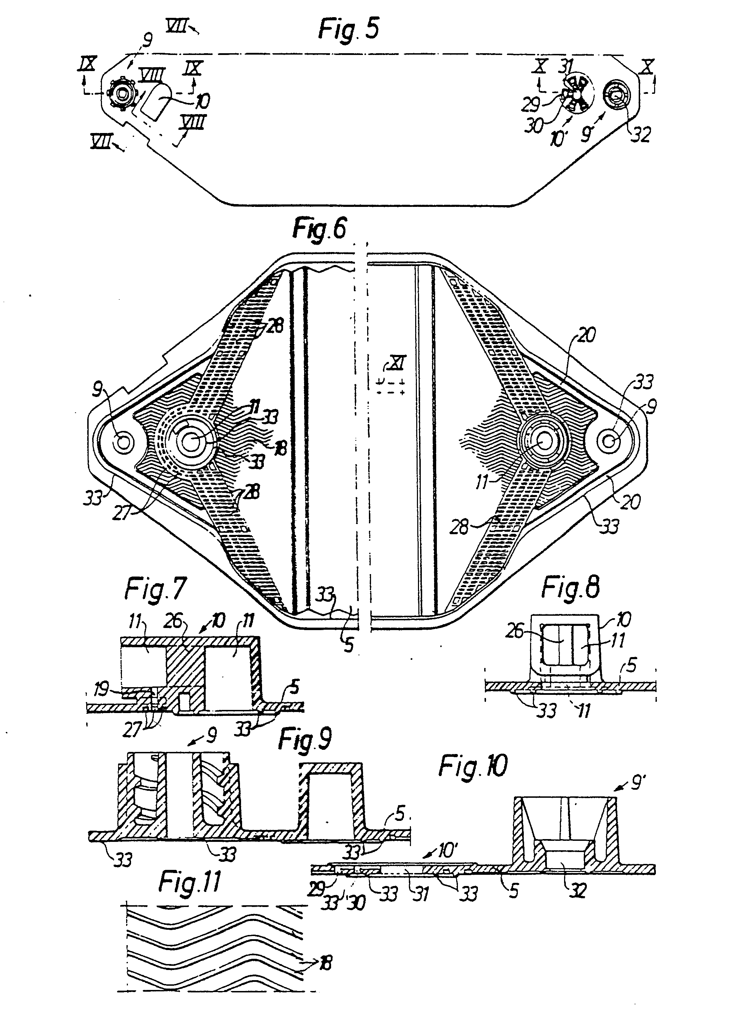

A blood outlet or blood inlet 9 is shown on a larger scale in figure 4. Here the blood is distributed through a duct 22, which is formed by hole 23 in the spacer plates 1 and by blood buttons 24 shown schematically. The latter, which are arranged between the membranes arranged in pairs, may be of the design, for example, which is described in Swedish patent 355 293. At the bottom the duct 22 is shut off by means of a plug 25. The blood is then conducted, as can best be seen from figure 6, between the membranes 2 along the ducts 20, and is then distributed on the working surface proper by virtue of the V-shaped duct system 28.

In figures 5—11 the lower intermediate plate 5 is shown in greater detail. Since the upper intermediate plate 6 on the whole corresponds to the lower one, there is no need to show or describe it to in greater detail. The spacer plates may be designed substantially in accordance with the upper side of the intermediate plate 5 shown, that is to say largely in accordance with figures 6 and 11. There is no need here either, therefore, for a detailed description.

The angle nipple 10 with angle duct 11 and lateral duct 19 can best be seen in figures 7 and 8. As is evident from these figures, the angle duct 11 is partly divided into two ducts by an inner partition 26. The lateral duct 19 ends in a duct system 27, which can also be seen in fig. 6, surrounding the one end of the angle duct 11, and in fig. 3. From the duct system 27 the dialysis liquid issues into a V-shaped duct system 28 and via this into the ducts 18 in the working surface proper of the upper surface of the intermediate plate 5. In the same manner the dialysis liquid issues into corresponding ducts 18 in the spacer plates 1 designed substantially in the same manner.

In figure 5 is shown the lower intermediate plate 5 seen from underneath. On the left-hand side in the figure an angle nipple 10 and a blood connection 9 can be discerned. The latter corresponds by and large to the connection 9 shown in figure 4 seen from above.

On the right-hand side in figure 5, end closures for the ducts 12 or 23 can be seen. They are designated here by numerals 10' and 9' respectively. In the duct closure 10' through-openings 29, 30 and 31 are present, which can also be seen in Figure 3. The duct closure 9' comprises an oval hole 32 and this can also be seen in Figure 4 inside the plug 25.

The hole 32 is also evident in figure 10, where the through-openings 29, 30 and 31 are also noticeable.

Numeral 33 generally designates sealing beads, adapted to as to press together in a tight manner the membranes arranged in pairs, in order to prevent blood and dialysis liquid from becoming mixed. At the same time they seal the apparatus towards the outside.

Other details shown on the drawings should be fairly self-explanatory to those skilled in the art, or they are of minor importance in respect of the invention and do not, therefore, require detailed description.

## Claims

1. A device for the diffusion of substances between two fluids comprising semipermeable membranes (2) which are arranged in a stack separated by spacer plates (1) which comprise throughholes (13, 23) connected to inlets and outlets for the respective fluids, a first fluid of which is arranged so us to be conducted on one side of the membranes and a second fluid on the opposite side of the same membranes, where the stack of spacer plates (1) and membranes (2) is arranged between a top plate (4) and a bottom plate (3), the inlet and/or outlet for at least one of the said fluids communicating by means of an enclosed duct (11) with a duct (12) intersecting the stack and formed by the said through-holes (13), the stack of spacer plates (1) and intermediate membranes (2) having an elongated shape with tapering ends, characterized in that the inlet and/or outlet communicates with the duct (12) intersecting the stack via said enclosed duct (11) and via a nipple (8) which is wholly within the area defined by the longitudinal and transverse prolongations of a front wall and adjacent side wall, respectively, and in that each enclosed duct (11) is an angular duct.

2. A device in accordance with claim 1, characterized in that the membranes (2) are arranged in pairs between the spacer plates (1).

3. A device in accordance with claim 1, characterized in that the angular enclosed duct (11) is formed by an angled nipple (10) arranged on an intermediate plate (5 and/or 6) arranged between the top plate (4) and the nearest spacer plate (1) and/or between the bottom plate (3) and the nearest spacer plate (1).

4. A device in accordance with claim 3, characterized in that the said enclosed angular duct (11) is provided with a lateral duct (19) which connects it directly to the inner side of the intermediate plate (5 and/or 6).

5. A device in accordance with anyone of the preceding claims where the stack of spacer plates (1) and membranes (2) is gripped between a top plate (4) and a bottom plate (3) with the help of clamping rails (7) arranged between grooves in the top and bottom plates, characterized in that at least one of these clamping rails (7) is provided with holes for said connecting nipples (8).

6. A device in accordance with claim 5, characterized in that the said connecting nipples (8) are fixed to the top and bottom plates (4, 3) and/or the clamping rails (7).

7. A device in accordance with claim 5 or 6, comprising two clamping rails (7) characterized in that one clamping rail comprises holes for two connecting nipples (8), whilst the other does not comprise any such holes.

## Patentansprüche

1. Vorrichtung für die Diffusion von Stoffen zwischen zwei Fluiden mit semipermeablen Membranen (2), die in einem Stapel angeordnet sind, durch Abstandsplatten (1) getrennt, die durchgehende Löcher (13, 23) aufweisen, welche mit Einlässen und Auslässen für die entsprechenden Fluide verbunden sind, wobei ein erstes Fluid angeordnet ist, um auf einer Seite der Mebranen geführt zu werden, und ein zweites Fluid auf der gegenüberliegenden Seite der Membranen, wobei der Stapel von Abstandsplatten (1) und Membranen (2) zwischen einer oberen Platte (4) und einer Bodenplatte (3) angeordnet ist, der Einlaß und/oder Auslaß für mindestens eines der Fluide mittels einer eingeschlossenen Durchführung (11) mit einer Durchführung (12) in Verbindung steht, welche den Stapel schneidet und durch die durchgehenden Löcher (13) gebildet ist, wobei der Stapel von Abstandsplatten (1) und Zwischenmembranen (2) längliche Gestalt hat mit verjüngt zulaufenden Enden, dadurch gekennzeichnet, daß der Einlaß und/oder Auslaß mit der Durchführung (12) in Verbindung steht, welche den Stapel schneidet, und zwar über die eingeschlossene Durchführung (11) und über einen Nippel (8), der sich ganz innerhalb des Bereiches befindet, welcher durch die länglichen und Querverlängerungen einer Vorderwand bzw. einer benachbarten Seitenwand gebildet ist, und daß jede eingeschlossene Durchführung (11) eine winkelförmige Durchführung ist.

2. Vorrichtung nach Anspruch 1, dadurch gekennzeichnet, daß die Membranen (2) in Paaren zwischen den Abstandsplatten (1) angeordnet sind.

3. Vorrichtung nach Anspuch 1, dadurch gekennzeichnet, daß die winkelförmige, eingeschlossene Durchführung (11) durch einen winkeligen Nippel (10) gebildet ist, der auf einer Zwischenplatte (5 und/oder 6) angeordnet ist, die zwischen der oberen Platte (4) und der nächsten Abstandsplatte (1) angeordnet ist und/oder zwischen der Bodenplatte (3) und der nächsten Abstandsplatte (1).

4. Vorrichtung nach Anspruch 3, dadurch gekennzeichnet, daß die eingeschlossene, winkelförmige Durchführung (11) mit einer seitlichen Durchführung (19) versehen ist, welche sie direkt mit der Innenseite der Zwischenplatte (5 und/oder 6) verbindet.

5. Vorrichtung nach einem der vorhergehenden Ansprüche, wobei der Stapel von Abstandsplatten (1) und Membranen (2) zwischen einer oberen Platte (4) und einer Bodenplatte (3) mit Hilfe von Klemmschienen (7) gehalten ist, die zwischen Nuten in der oberen und Bodenplatte angeordnet sind, dadurch gekennzeichnet, daß mindestens eine der Klemmschienen (7) mit Löchern für die Verbindungsnippel (8) versehen ist.

6. Vorrichtung nach Anspruch 5, dadurch gekennzeichnet, daß die Verbindungsnippel (8) an der oberen und Bodenplatte (4, 3) und/oder den Klemmschienen (7) angebracht sind.

7. Vorrichtung nach Anspruch 5 oder 6, mit zwei Klemmschienen (7), dadurch gekennzeichnet, daß eine Klemmschiene Löcher für zwei Verbindungsnippel (8) aufweist, während die andere nicht solche Löcher aufweist.

**Revendications**

1. Dispositif pour la diffusion de substances entre deux fluides comprenant des membranes semi-perméables (2) qui sont agencées dans un empilage et séparées par des plaques d'espacement (1) qui comportent des trous traversants (13, 23) connectés aux entrées et sorties pour les fluides respectifs, un premier fluide étant disposé de manière à être conduit sur une face des membranes et un deuxième fluide sur la face opposée des mêmes membranes, l'empilage de plaques d'espacement (1) et de membranes (2) étant placé entre une plaque supérieure (4) et une plaque inférieure (3), l'entrée et/ou la sortie pour au moins l'un desdits fluides communiquant par l'intermédiaire d'un conduit intérieur (11) avec un conduit (12) qui traverse l'empilage et qui est constitué par lesdits trous traversants (13), l'empilage de plaques d'espacemet (1) et de membranes intermédiaires (2) ayant une configuration allongée avec des extrémités convegentes, caractérisé en ce que l'entrée et/ou la sortie communique avec le conduit (12) traversant l'empilage, par l'intermédiaire dudit conduit intérieur (11) et d'un raccord (8) qui est situé entièrement à l'intérieur de la zone définie par les prolongements longitudinaux et transversaux d'une paroi avant et d'une paroi latérale adjacente, respectivement, et en ce que chaque conduit intérieur (11) est un conduit coudé.

2. Dispositif suivant la revendication 1, caractérisé en ce que les membranes (2) sont agencées par paires entre les plaques d'espacement (1).

3. Dispositif suivant la revendication 1, caractérisé en ce que le conduit intérieur coudé (11) est formé par une tubulure coudée (10) prévue sur une plaque intermédiaire (5 et/ou 6) placée entre la plaque supérieure (4) et la plaque d'espacement (1) la plus proche ce celle-ci et/ou entre la plaque inférieure (3) et la plaque d'espacement (1) la plus proche de celle-ci.

4. Dispositif suivant la revendication 3, caractérisé en ce que ledit conduit coudé intérieur (11) comporte un conduit latéral (19) qui le connecte directement à la face intérieure de la plaque intermédiaire (5 et/ou 6).

5. Dispositif suivant une quelconque des revendications précédentes, dans lequel l'empilage de plaques d'espacement (1) et de membranes (4) et une plaque inférieure (3) à l'aide de profilés de blocage (7) disposés entre des gorges ménagées dans les plaques supérieure et inférieure, caractérisé en ce qu'au moins l'un de ces profilés de blocage (7) comporte des trous pour le passage desdits raccords (8).

6. Dispositif suivant la revendication 5, caractérisé en ce que lesdits raccords (8) sont fixés aux plaques supérieure et inférieure (4, 3) et/ou aux profilés de blocage (7).

7. Dispositif suivant la revendication 5 ou 6, comprenant deux profilés de blocage (7), caractérisé en ce qu'un profilé de blocage comporte des trous pour le passage de deux raccords (8), tandis que l'autre ne comporte pas de tels trous.

0 091 571

Fig.1

Fig.2

Fig.3

Fig.4

Fig. 5

Fig. 6

Fig. 7

Fig. 8

Fig. 9

Fig. 10

Fig. 11

2